# EUROPÄISCHE PATENTSCHRIFT

(11) **EP 4 029 818 B1**
(45) Veröffentlichungstag und Bekanntmachung des Hinweises auf die Patenterteilung: **20.12.2023**
(21) Anmeldenummer: 21151278.5
(22) Anmeldetag: 13.01.2021
(51) Int. Cl.: B65H 23/038, B65H 39/16, B32B 37/20, B32B 38/18

(54) **BAHNLAUFSTEUERVORRICHTUNG**
WEBPATH CONTROL DEVICE
DISPOSITIF DE COMMANDE DU DÉFILEMENT DE BANDE

(43) Veröffentlichungstag der Anmeldung: 20.07.2022
(73) Patentinhaber: BST GmbH, 33729 Bielefeld (DE)
(72) Erfinder: Prims, Ulrich, 33607 Bielefeld (DE); Lorenz, Robin, 32051 Herford (DE); Schumacher, Jörgen, 32049 Herford (DE)
(74) Vertreter: Ter Meer Steinmeister & Partner

(56) Entgegenhaltungen:
- WO-A1-00/06478
- WO-A1-2009/133992
- GB-A- 943 106
- JP-A- 2000 301 630
- JP-A- 2001 302 072
- US-A- 4 598 849

## Beschreibung

Die Erfindung betrifft eine Bahnlaufsteuervorrichtung, mit mehreren Drehrahmeneinheiten, die jeweils einen Tragrahmen und einen dazu parallelen Drehrahmen aufweisen, der eine Einlaufrolle und eine Auslaufrolle für eine zu steuernde Bahn trägt und durch ein Lager schwenkbar an dem Tragrahmen gehalten ist, und mit einem Bahnführungssystem, das so angeordnet ist, dass jede von mehreren Bahnen zu einer der Einlaufrollen zugeführt und an dieser umgelenkt wird und dann an der Auslaufrolle erneut umgelenkt wird.

Bei der Bearbeitung von laufenden Materialbahnen, beispielsweise bei der Herstellung von Kompositbahnen für Reifenkarkassen, ist es oft erforderlich, mehrere Materialbahnen in korrekter lateraler Ausrichtung zusammenzuführen. Der Bahnlauf jeder Bahn muss dabei so gesteuert oder geregelt werden, dass ein Auswandern der Bahn in der Richtung quer zur Laufrichtung verhindert wird. Zu diesem Zweck wird die Bahn so durch eine Drehrahmeneinheit gefädelt, dass sie an der Einlaufrolle und an der Auslaufrolle jeweils um beispielsweise 90° umgelenkt wird. Wenn die Laufrichtung von der gewünschten Richtung abweicht, so wird der Drehrahmen, der die Einlaufrolle und die Auslaufrolle trägt, relativ zu dem Tragrahmen so verschwenkt, dass die Einlauf- und Auslaufrollen eine andere Orientierung einnehmen und die Bahn wieder in die gewünschte Richtung zurücklenken.

Bei den meisten herkömmlichen Bahnlaufsteuervorrichtungen sind die Einlaufrolle und die Auslaufrolle mit parallelen Achsen in einer zu dem Drehrahmen parallelen Ebene angeordnet, die jedoch gegenüber der Ebene des Drehrahmens so weit versetzt ist, dass die Rollen frei drehbar sind. Der Drehrahmen und der Tragrahmen sind annähernd kongruent ausgebildet und sind ebenfalls in zueinander versetzten Ebenen angeordnet, so dass sie relativ zueinander verschwenkt werden können. Insgesamt hat die Drehrahmenkonstruktion somit einen dreilagigen Aufbau. Ein Beispiel einer solchen Anordnung ist in US 2003/213867 A1 gezeigt.

Der Drehpunkt, um den der Drehrahmen relativ zum Tragrahmen verschwenkt wird, sollte im Idealfall in der Mitte der einlaufenden Bahn liegen, so dass die Schwenkachse rechtwinklig zur Ebene des Drehrahmens und tangential zum äußeren Scheitel der Einlaufrolle verläuft. So lässt sich erreichen, dass beim Verschwenken des Drehrahmens die einlaufende Bahn praktisch ortsfest bleibt, während sich die auslaufende Bahn in der gewünschten Richtung verlagert.

Ein Lager mit virtuellem Drehpunkt hat den Vorteil, dass die ideale Position für die Schwenkachse realisiert werden kann, ohne dass sich an dieser Stelle irgendwelche mechanischen Achsen- oder Lagerelemente befinden, die mit der einlaufenden Bahn kollidieren würden. Die Lagerkonstruktion muss dabei so stabil sein, dass sie der durch den Bahnzug verursachten Kraft standhält, die die Tendenz hat, den Drehrahmen vom Tragrahmen abzuziehen.

In DE 20 2017 100 819 U1 wird eine Drehrahmenanordnung beschrieben die sich durch eine besonders geringe Bauhöhe auszeichnet. Dokument US,4,598,849 offenbart den Gegenstand des Oberbegriffs des Anspruchs 1.

Aufgabe der Erfindung ist es, eine Bahnlaufsteuervorrichtung mit einem verringertem Platzbedarf zu schaffen

Diese Aufgabe wird erfindungsgemäß dadurch gelöst, dass die Drehrahmeneinheiten so ineinander geschachtelt sind, dass die Bahnabschnitte der mehreren Bahnen, die zwischen den jeweiligen Einlauf- und Auslaufrollen verlaufen, zueinander parallel sind und der Abstand je zweier benachbarter dieser Bahnabschnitte höchstens gleich der Summe der Durchmesser der Einlauf- und Auslaufrollen ist, zwischen denen diese Bahnabschnitte verlaufen, und dass die Einlaufrollen der mehreren Drehrahmenanordnungen in der Richtung parallel zu den Bahnabschnitten gegeneinander versetzt sind.

Durch die verschachtelte Anordnung der Drehrahmeneinheiten und durch die geringen Abstände dieser Einheiten in der Richtung senkrecht zu den Rahmenebenen wird ein sehr kompakter Aufbau der kompletten Bahnlaufsteuervorrichtung erreicht. Damit wird nicht nur der benötigte Bauraum reduziert, sondern auch eine Verkürzung der Bahntransportwege erreicht, was einen stabileren Bahntransport und einen einfacheren Aufbau des Bahnführungssystems ermöglicht. Durch den Versatz der Einlaufrollen bleibt dabei die Möglichkeit erhalten, die Bahnen an diesen Einlaufrollen jeweils um 90° umzulenken. Wenn der virtuelle Drehpunkt des Drehrahmens am äußeren Scheitel der Einlaufrolle liegt, so fällt die Schwenkachse des Drehrahmens mit der Mitte des einlaufenden Bahnabschnitts zusammen, so dass dieser einlaufende Bahnabschnitt beim Verschwenken des Drehrahmens nur eine Torsion erfährt und die Zugspannung über die gesamte Bahnbreite im wesentlichen einheitlich bleibt.

Vorteilhafte Ausgestaltungen sind in den Unteransprüchen angegeben.

Wenn die Einlauf- und Auslaufrollen aller Drehrahmeneinheiten den gleichen Durchmesser haben, so ist der Abstand zwischen den parallelen Bahnabschnitten kleiner als das Zweifache dieses Durchmessers. Im Fall einer Z-Fädelung haben die Drehrahmeneinheiten in der Seitenansicht insgesamt eine etwa L-förmige Konfiguration, und die Länge des kürzeren Schenkels des L entspricht dem doppelten Rollendurchmesser. Die Drehrahmeneinheiten sind dann so ineinander verschachtelt, dass sie einander auch in der Richtung senkrecht zu den Rahmenebenen überlappen.

In einer Ausführungsform haben alle Drehrahmeneinheiten die gleichen Abmessungen. Dadurch wird nicht nur eine rationelle Fertigung ermöglicht, sondern zugleich erreicht, dass auch die Auslaufrollen in der Laufrichtung der Bahnabschnitte gegeneinander versetzt sind, so dass auch an den Auslaufrollen eine 90°-Umlenkung der Bahnabschnitte stattfinden kann.

In einer anderen Ausführungsform ist das Bahnführungssystem für eine U-Fädelung ausgelegt. In dem Fall sind die Abstände zwischen der Einlaufrolle und der Auslaufrolle bei den verschiedenen Drehrahmeneinheiten voneinander verschieden, und die U-förmigen Bahnverläufe sind ineinander geschachtelt.

Im folgenden werden Ausführungsbeispiele anhand der Zeichnungen näher erläutert.

Es zeigen:
- Fig. 1: eine schematische Darstellung einer Bahnlaufsteuervorrichtung gemäß einem ersten Ausführungsbeispiel;
- Fig. 2: eine schematische Darstellung einer Drehrahmenanordnung in der Draufsicht;
- Fig. 3: die Drehrahmenanordnung nach Fig. 2 mit leicht verschwenktem Drehrahmen;
- Fig. 4: eine Ansicht der Drehrahmenkonstruktion in Richtung der Pfeile IV - IV in Fig. 2;
- Fig. 5: eine vergrößerte Seitenansicht der Drehrahmenkonstruktion in Richtung der Pfeile V - V in Fig. 1; und
- Fig. 6: eine Bahnlaufsteuervorrichtung gemäß einem anderen Ausführungsbeispiel.

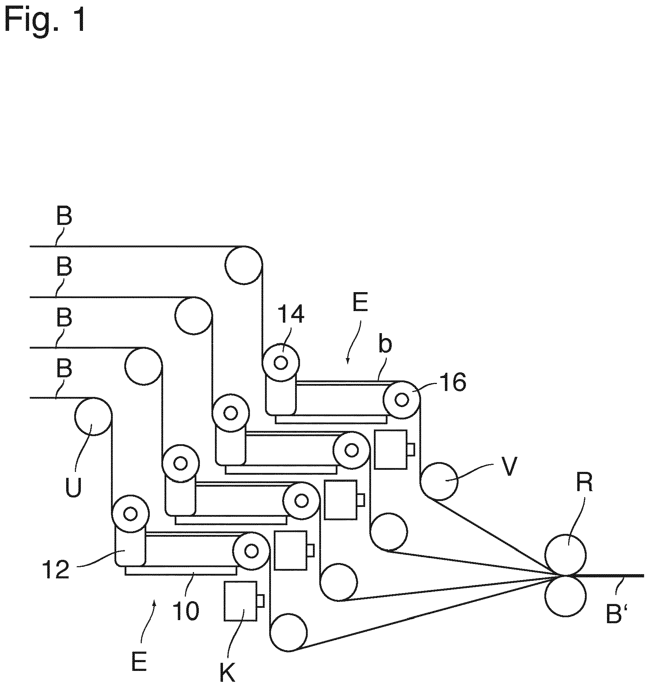

In Fig. 1 ist der Aufbau einer erfindungsgemäßen Bahnlaufsteuervorrichtung mit vier Drehrahmeneinheiten E schematisch dargestellt. Alle vier Drehrahmeneinheiten haben gleiche Abmessungen und eine insgesamt L-förmige Konfiguration und sind damit für eine Z-Fädelung von vier Materialbahnen B ausgelegt. Jede Drehrahmeneinheit E weist einen stationären Tragrahmen 10 und einen relativ zu dem Tragrahmen schwenkbaren Drehrahmen 12 auf. Im Drehrahmen 12 sind jeweils eine Einlaufrolle 14 und eine Auslaufrolle 16 gelagert. Ein Bahnführungssystem wird durch zwei Sätze von Umlenkrollen U, V gebildet, über die die Bahnen B so geführt werden, dass sie jeweils an der Einlaufrolle 14 um 90° umgelenkt werden, im gezeigten Beispiel von der Vertikalen in die Horizontale, und dass sie an der Auslaufrolle 16 erneut um 90° umgelenkt werden. Von den stromabwärtigen Umlenkrollen V aus verlaufen die Bahnen dann konvergierend zu einem Rollenpaar R, in dessen Rollenspalt die Bahnen zusammengeführt und aufeinander laminiert werden, so dass sie zusammen eine Kompositbahn B' bilden.

In dem vertikalen Abschnitt zwischen der Auslaufrolle 16 und der stromabwärtigen Umlenkrolle V wird die laterale Position jeder Bahn mit Hilfe einer Kamera K erfasst. Auf der Basis dieser Positionsdaten werden die Drehbewegungen der Drehrahmen 12 so gesteuert, dass die laterale Position jeder Bahn auf einen jeweilgen Sollwert geregelt wird, so dass die Bahnen positionsgerecht übereinander laminiert werden.

Die Rahmenebenen der Tragrahmen 10 aller vier Drehrahmeneinheiten E sind zueinander parallel. Jede Bahn B bildet zwischen der Einlaufrolle 14 und der Auslaufrolle 16 einen Bahnabschnitt b, der parallel zur Rahmenebene verläuft. Somit sind auch alle vier Bahnabschnitte b zueinander parallel.

Im gezeigten Beispiel haben die Einlaufrollen 14 und die Auslaufrollen 16 aller vier Drehrahmeneinheiten den gleichen Durchmesser. Der Abstand zwischen zwei benachbarten Bahnabschnitten b in der Richtung senkrecht zur Rahmenebene beträgt in diesem Beispiel nur das 1,5-fache des Durchmessers der Einlauf- und Auslaufrollen, so dass die Einlaufrolle 14 jeder Drehrahmeneinheit (mit Ausnahme der obersten) in der Höhe mit der Auslaufrolle 16 der nächsthöheren Drehrahmeneinheit überlappt. Auf diese Weise sind die L-förmigen Drehrahmeneinheiten E kompakt ineinander geschachtelt.

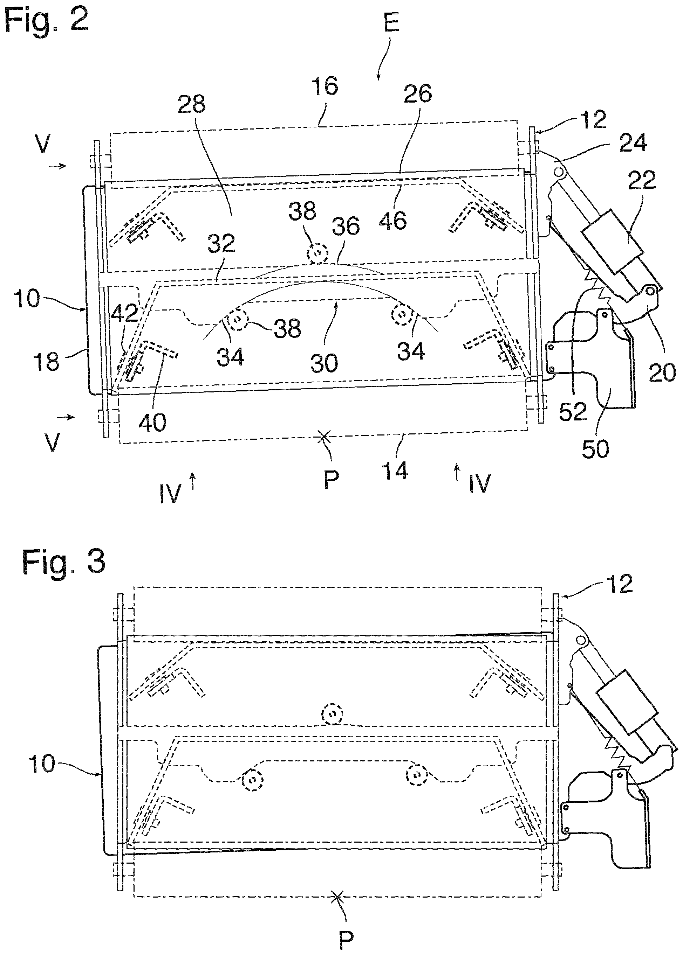

Ein Beispiel für einen möglichen Aufbau einer einzelnen Drehrahmeneinheit E soll im folgenden anhand der Fig. 2 bis 5 erläutert werden.

In Fig. 2 ist eine der Drehrahmeneinheiten E in einer Draufsicht gezeigt. Man erkennt den Tragrahmen 10 und den Drehrahmen 12, der um einen virtuellen Drehpunkt P relativ zu dem Tragrahmen verschwenkbar ist. Fig. 3 zeigt die Drehrahmeneinheit mit leicht verschwenktem Drehrahmen. Zur besseren Unterscheidung sind alle zu dem Tragrahmen 10 gehörenden (stationären) Teile in fetteren Linien dargestellt als die Teile, die mit dem Drehrahmen 12 beweglich sind.

In dem Drehrahmen 12 sind die Einlaufrolle 14 und die Auslaufrolle 16 gelagert, über die die hier nicht gezeigte Materialbahn geführt ist, deren Bahnlauf mit Hilfe der Drehrahmeneinheit gesteuert werden soll. Beispielsweise kann die Materialbahn wie in Fig. 1 in Z-Fädelung abwärts (in Fig. 1 vom Betrachter weg) zu der Einlaufrolle 14 laufen, an der sie in die Horizontale umgelenkt wird, so dass sie zu der Auslaufrolle 16 verläuft, an der sie erneut umgelenkt wird, so dass sie sich dann wieder abwärts bewegt.

Der Tragrahmen 10 weist eine horizontale Grundplatte 18 auf, von der in Fig. 2 der größte Teil durch den Drehrahmen 12 verdeckt ist, so dass nur die Ränder der Grundplatte 18 sichtbar ist. Auf der rechten Seite in Fig. 1 bildet die Grundplatte 18 einen Hebelarm 20, der über den seitlichen Rand des Drehrahmens 12 hinausragt und über einen gelenkig angebundenen Linearantrieb 22 mit einer Konsole oder einem Hebelarm 24 des Drehrahmens verbunden ist. Wenn der Linearantrieb 22 die Hebelarme 20 und 24 zusammenzieht, so schwenkt der Drehrahmen 12 um die durch den Drehpunkt P gehende vertikale Schwenkachse, wie in Fig. 3 gezeigt ist. Diese Schwenkachse bildet eine Tangente an die Einlaufrolle 14, so dass die Einlaufrolle und damit die einlaufende Materialbahn beim Verdrehen des Drehrahmens 12 keine Querbewegung ausführt, während die Auslaufrolle 16 und die auslaufende Materialbahn eine Positionsverlagerung in Querrichtung erfahren.

Der Drehrahmen 12 bildet ein rinnenförmiges, nach unten offenes Gehäuse 26, dessen obere Wand einen Riegel 28 zum Halten einer im Inneren des Gehäuses 26 aufgenommene Kurvenplatte 30 bildet, die über ein vertikales, im Grundriss trapezförmiges Wandelement 32 mit dem Riegel 28 verbunden ist.

Der Rand der Kurvenplatte 30 bildet auf der in Fig. 2 unteren Seite zwei kreisbogenförmige Steuerkurven 34 und auf der oberen Seite eine weitere kreisförmige Steuerkurve 36. Die Steuerkurven 34 und 36 sind auf den virtuellen Drehpunkt P zentriert. Um die Krümmung dieser Steuerkurven 34, 36 zu verdeutlichen, sind in Fig. 2 verlängerte Kreisbogenstücke (durchgezogene Linien) dargestellt. Jeder Steuerkurve 34, 36 ist eine Tastrolle 38 zugeordnet, die um eine vertikale Achse drehbar am Tragrahmen 10 gelagert ist. Die drei Tastrollen 38 liegen praktisch spielfrei am Rand der Kurvenplatte 30 an, so dass diese Kurvenplatte und damit der gesamte Drehrahmen 12 relativ zum Tragrahmen nur eine Kreisbewegung um den virtuellen Drehpunkt P ausführen kann.

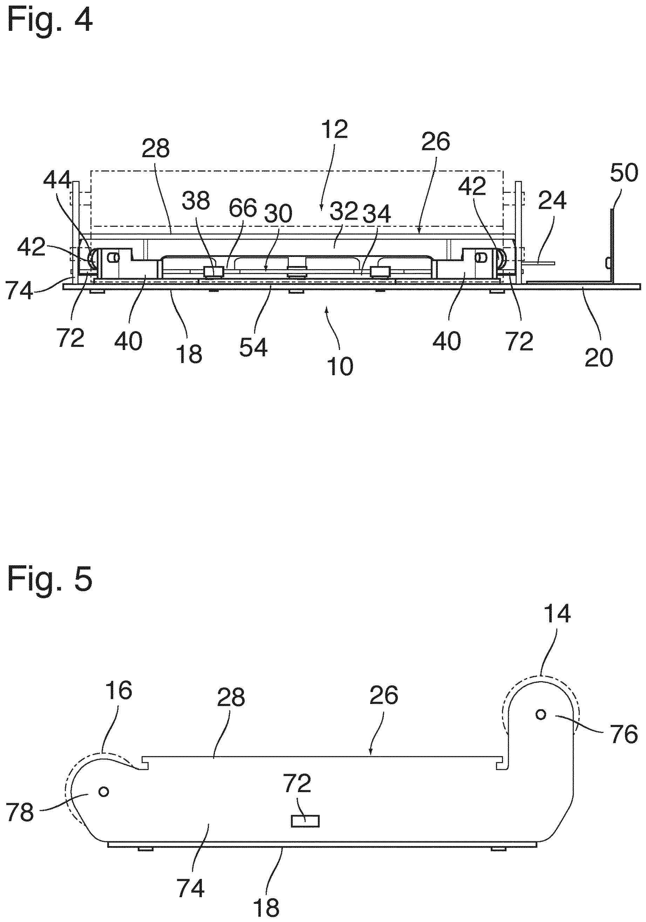

Auf dem Tragrahmen 10 sind vier Haltewinkel 40 montiert, die vertikal von der Grundplatte aufragen und an denen jeweils eine Tragrolle 42 gelagert ist. Zwei dieser Tragrollen 42 sind in Schlitzen 44 (Fig. 4) aufgenommen, die waagerecht in den Schenkeln des trapezförmigen Wandelements 32 verlaufen. Diese Schenkel des Wandelements 32 sind so angewinkelt, dass sie tangential zu einem Kreisbogen um den virtuellen Drehpunkt P verlaufen. Wenn auf den Drehrahmen 12 eine abwärts gerichtete (Gewichts-)Kraft wirkt, so werden die oberen Ränder der Schlitze 44 gegen die Tragrollen 42 gedrückt, so dass sich das Wandelement 32 und damit der gesamte Drehrahmen 12 auf den Tragrollen 42 abstützt. Wenn nun der Drehrahmen verschwenkt wird, so kommt es zu einer Relativbewegung zwischen der Tragrolle und dem Schlitz, und die Tragrolle rollt an der oberen Kante des Schlitzes ab.

Für den Fall, dass auf den Drehrahmen 12 eine aufwärts gerichtete Kraft wirkt, werden die unteren Ränder der Schlitze 44 gegen die Tragrollen 42 gezogen, und bei einer Drehbewegung rollen die Tragrollen an diesen unteren Rändern der Schlitze ab. Das Spiel der Tragrollen 42 in den Schlitzen 44 ist einerseits so groß, dass die Tragrollen sich reibungsarm bewegen können, andererseits jedoch so klein, dass die aufgrund dieses Spiels mögliche Vertikalbewegung des Wandelements 32 relativ zum Tragrahmen innerhalb der zulässigen Toleranzgrenzen bleibt.

In dem Gehäuse 26 des Drehrahmens 12 ist ein weiteres im Grundriss trapezförmiges Wandelement 46 aufgenommen, das fest an der Unterseite des Riegels 28 gehalten ist, und in dessen angewinkelten Schenkeln ebenfalls horizontale Schlitze gebildet sind. Zwei der insgesamt vier Tragrollen 42 sind in diesen Schlitzen des Wandelements 46 aufgenommen. Auch die Schenkel dieses Wandelements sind so angewinkelt, dass sie tangential zu einem Kreisbogen um den virtuellen Drehpunkt P verlaufen. Das Wandelement 46 wird deshalb durch die Tragrollen 42 auf die gleiche Weise geführt und spielarm abgestützt wie das Wandelement 32. Insgesamt wird durch den Eingriff der Tragrollen 42 in die Schlitze eine Vertikalbewegung des Drehrahmens relativ zum Tragrahmen verhindert, und der Drehrahmen und der Tragrahmen werden exakt parallel zueinander ausgerichtet gehalten.

An der Grundplatte 18 des Tragrahmens und an dem durch diese Grundplatte gebildeten Hebelarm 20 ist ein Halter 50 für ein Ende einer Zugfeder 52 befestigt. Das andere Ende dieser Zugfeder ist an dem Hebelarm 24 des Drehrahmens 12 verankert, so dass permanent eine Zugkraft ausgeübt wird, die die Tendenz hat, die Hebelarme 20 und 24 zusammenzuziehen und den Drehrahmen 12 im Uhrzeigersinn relativ zum Tragrahmen 10 zu verschwenken. Der Linearantrieb 22 ist jedoch zumindest in der Richtung, in der sich seine Länge verkürzt, selbsthaltend, so dass das durch die Zugfeder 52 bewirkte Drehmoment nicht zu einer tatsächlichen Verschwenkung des Drehrahmens 12 führt. Die durch die Feder 52 bewirkte elastische Vorspannung führt jedoch dazu, dass jegliches Lagerspiel des durch die Steuerkurven 34, 36 und die Tastrollen 38 gebildeten Lagers sowie jegliches Antriebsspiel des Linearantriebs 22 und seiner gelenkigen Anbindungen an die Hebelarme 20, 24 beseitigt wird.

Beim Betrieb der Bahnlaufsteuervorrichtung wird die laterale Position der Materialbahn mit Hilfe der Kamera K erfasst, und über einen Regler wird der Linearantrieb 22 so gesteuert, dass die Position der Materialbahn auf einen Sollwert eingeregelt wird. Bei diesem Regelspiel wird der Linearantrieb 22 abwechselnd eingefahren und ausgefahren, um den Drehrahmen mal in der einen Richtung und mal in der anderen Richtung zu verschwenken. Die Zugfeder 52 sorgt dafür, dass bei diesem Regelspiel keinerlei Hysterese auftritt, da alle Komponenten des Systems, an denen ein gewisses Spiel auftreten kann, durch die Feder stets an derselben Grenze des durch dieses Spiel ermöglichten Bewegungsbereiches gehalten werden.

In Fig. 4 ist die Drehrahmeneinheit in einer Frontansicht gezeigt. Auf die Grundplatte 18 des Tragrahmens 10 ist eine Lagerplatte 54 aufgeschweißt, auf der die Tastrollen 34, 36 gelagert sind.

Auch die Haltewinkel 40 für die Tragrollen 42 sind auf die Lagerplatte 54 aufgeschweißt. Eine genaue Positionierung und sichere Fixierung der Haltewinkel 40 wird dadurch erreicht, dass diese Haltewinkel an ihrer der Lagerplatte 54 zugewandten Kante nicht gezeigte Zapfen aufweisen, die in entsprechende Zapfenlöcher der Lagerplatte 54 eingreifen.

In Fig. 4 ist das Wandelement 46 größtenteils durch das davorliegende Wandelement 32 verdeckt, so dass lediglich nach unten vorspringende Haltestege 66 sichtbar bleiben. Diese Haltestege weisen an ihren freien unteren Enden Zapfen auf, die in entsprechende Zapfenlöcher der Kurvenplatte 30 eingreifen. Die Kurvenplatte 30 ist mit den Zapfen verschweißt und wird so in ihrer Position in dem Drehrahmen 12 fixiert. Zur zusätzlichen Stabilisierung weist die Kurvenplatte 30 an beiden Enden Fortsätze 72 auf, die formschlüssig in entsprechende Ausnehmungen in Seitenwänden 74 des Gehäuses 26 eingreifen.

In Fig. 5 ist die Drehrahmenkonstruktion in einer Seitenansicht gezeigt. Von dem Tragrahmen ist hier nur die Grundplatte 18 zu sehen. Die Seitenwände 74 des Gehäuses 26 des Drehrahmens sind an beiden Enden zu Lagerfortsätzen 76, 78 für die Einlaufrolle 14 und die Auslaufrolle 16 verlängert. Diese Lagerfortsätze können je nach gewünschter Fädelung der Materialbahn eine unterschiedliche Form haben. Fig. 5 zeigt die Konfiguration für Z-Fädelung. Ohne den Lagerfortsatz 76 und die Einlaufrolle 14 ist die gesamte Bauhöhe der Drehrahmeneinheit nur wenig größer als der Durchmesser der Einlauf- und Auslaufrollen 14, 16. In Fig. 5 ist auch einer der Fortsätze 72 der Kurvenplatte zu erkennen, der die Seitenwand 74 durchgreift.

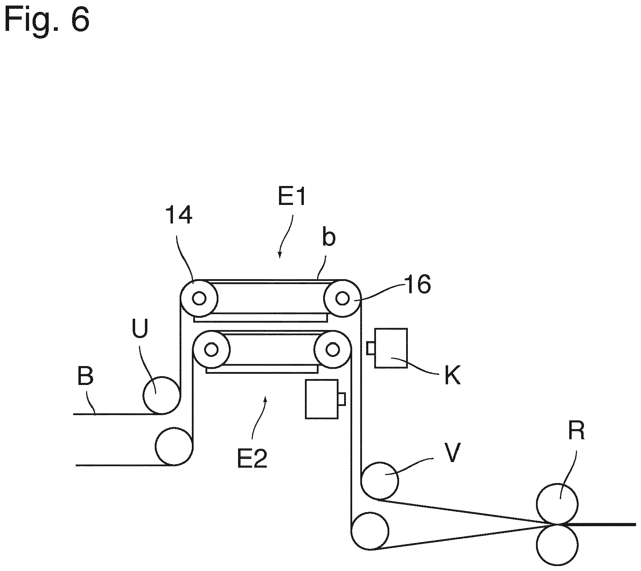

Fig. 6 illustriert eine mögliche andere Ausführungsform einer Bahnlaufsteuervorrichtung mit zwei Drehrahmeneinheiten E1 und E2, die für eine ineinander geschachtelte U-Fädelung konfiguriert sind. Die horizontalen Bahnabschnitte b zwischen der Einlaufrolle und der Auslaufrolle verlaufen parallel und haben den gleichen Abstand wie in Fig. 1. Die Einlaufrollen 14 der beiden Drehrahmeneinheiten sind in Laufrichtung der Bahnabschnitte b so weit gegeneinander versetzt, dass die an den Umlenkrollen U umgelenkten einlaufenden Bahnabschnitte beide in vertikaler Richtung parallel zueinander verlaufen können.

Im gezeigten Beispiel sind auch die Auslaufrollen 16 zueinander versetzt, so dass auch die auslaufenden, zu den Umlenkrollen V führenden Bahnabschnitte vertikal und parallel zueinander verlaufen können. Da im gezeigten Beispiel nur zwei Bahnen B vorhanden sind, können die Kameras K zur Lageerfassung auf entgegengesetzten Seiten der Bahnen angeordnet sein, so dass sich der Abstand zwischen den auslaufenden Bahnabschnitten sehr klein halten lässt.

In einer anderen Ausführungsform könnten die Auslaufrollen 16 vertikal übereinander angeordnet sein und die Umlenkrollen V könnten so angeordnet sein, dass die auslaufenden Bahnabschnitte etwas geneigt zur Vertikalen verlaufen und deshalb in verschiedenen Ebenen liegen.

## Patentansprüche

1. Bahnlaufsteuervorrichtung, mit mehreren Drehrahmeneinheiten (E; E1, E2), die jeweils einen Tragrahmen (10) und einen dazu parallelen Drehrahmen (12) aufweisen, der eine Einlaufrolle (14) und eine Auslaufrolle (16) für eine zu steuernde Bahn (B) trägt und durch ein Lager schwenkbar an dem Tragrahmen gehalten ist, und mit einem Bahnführungssystem (U, V), das so angeordnet ist, dass jede von mehreren Bahnen (B) zu einer der Einlaufrollen (14) zugeführt und an dieser umgelenkt wird und dann an der Auslaufrolle (16) erneut umgelenkt wird, wobei die Drehrahmeneinheiten (E; E1, E2) so ineinander geschachtelt sind, dass die Bahnabschnitte (b) der mehreren Bahnen, die zwischen den jeweiligen Einlauf- und Auslaufrollen verlaufen, zueinander parallel sind und **dadurch gekennzeichnet, dass** der Abstand je zweier benachbarter dieser Bahnabschnitte höchstens gleich der Summe der Durchmesser der Einlauf- und Auslaufrollen ist, zwischen denen diese Bahnabschnitte verlaufen, und dass die Einlaufrollen (14) der mehreren Drehrahmenanordnungen (E; E1, E2) in der Richtung parallel zu den Bahnabschnitten (b) gegeneinander versetzt sind.

2. Bahnlaufsteuervorrichtung nach Anspruch 1, bei der die Bahnen (B) an den Einlaufrollen (14) jeweils um 90° umgelenkt werden.

3. Bahnlaufsteuervorrichtung nach Anspruch 1 oder 2, bei der die Drehrahmeneinheiten (E) und das Bahnführungssystem (U, V) für Z-Fädelung konfiguriert sind.

4. Bahnlaufsteuervorrichtung nach Anspruch 3, bei der die Drehrahmeneinheiten (E) gleiche Abmessungen haben.

5. Bahnlaufsteuervorrichtung nach Anspruch 1, bei der die Drehrahmeneinheiten (E1, E2) und das Bahnführungssystem (U, V) für U-Fädelung konfiguriert sind und die U-Fädelungen ineinander geschachtelt sind, wobei die Abstände zwischen den Einlaufrollen (14) und den Auslaufrollen (16) der Drehrahmeneinheiten in der Schachtelung von innen nach außen zunehmen.

6. Bahnlaufsteuervorrichtung nach einem der vorstehenden Ansprüche, bei der die Einlaufrollen (14) und die Auslaufrollen (16) aller Drehrahmeneinheiten (E; E1, E2) gleiche Durchmesser haben.

7. Bahnlaufsteuervorrichtung nach einem der vorstehenden Ansprüche, bei der die Bahnen (B) an den jeweiligen Auslaufrollen (16) um 90° umgelenkt werden.

## Claims

1. A web transport control device having a plurality of rotary frame units (E; E1, E2) each of which comprises a carrier frame (10) and a rotary frame (12) which is parallel to the carrier frame and carries an input roller (14) and an output roller (16) for a material web (B) to be controlled, and which is pivotably supported on the carrier frame by means of a bearing, the device further comprising a web guiding system (U, V) arranged such that each of a plurality of material webs (B) is fed to one of the input rollers (14), is deflected thereat and is then deflected again at the output roller (16), wherein the rotary frame units (E; E1, E2) are nested one in the other such that web sections (b) of the plurality of webs that extend between the respective input and out rollers are parallel to one another, **characterized in that** the spacing between two neighboring ones of these web sections is not larger than the sum of the diameters of the input and output rollers between which these web sections extend, and the input rollers (14) of the plurality of rotary frame units (E; E1, E2) are offset relative to one another in the direction parallel to the web sections (b).

2. The web transport control device according to claim 1, wherein the webs (B) are deflected by 90° at the input rollers (14).

3. The web transport control device according to claim 1 or 2, wherein the rotary frame units (E) and the web guiding system (U, V) are configured for a Z-thread.

4. The web transport control device according to claim 3, wherein the rotary frame units (E) have equal dimensions.

5. The web transport control device according to claim 1, wherein the rotary frame units (E1, E2) and the web guiding system (U, V) are configured for a U-thread, the U-threads are nested, and the spacings between the input rollers (14) and the output rollers (16) of the rotary frame units increase outwardly.

6. The web transport control device according to any of the preceding claims, wherein the input rollers (14) and the output rollers (16) of all rotary frame units (E, E1, E2) have equal diameters.

7. The web transport control device according to any of the preceding claims, wherein the webs (B) are deflected by 90° at the respective output rollers (16).

## Revendications

1. Dispositif de commande de défilement de bande, comportant une pluralité d'unités à cadre rotatif (E ; E1, E2) comportant respectivement un cadre de support (10) et un cadre rotatif (12) parallèle à celui-ci, qui supporte un rouleau d'entrée (14) et un rouleau de sortie (16) pour une bande (B) à commander et est maintenu par un palier de façon à pouvoir pivoter sur le cadre de support, et comportant un système de guidage de bande (U, V) agencé de telle sorte que chaque bande de la pluralité de bandes (B) est acheminée jusqu'à l'un des rouleaux d'entrée (14), est déviée sur celui-ci puis à nouveau déviée sur le rouleau de sortie (16), dans lequel les unités à cadre rotatif (E ; E1, E2) sont imbriquées les unes dans les autres, de sorte que les parties de bande (b) de la pluralité de bandes qui s'étendent entre les rouleaux d'entrée et de sortie respectifs sont parallèles les unes aux autres, et **caractérisé en ce que** la distance entre deux parties de bande adjacentes parmi ces parties de bande est au plus égale à la somme des diamètres des rouleaux d'entrée et de sortie entre lesquels ces parties de bande s'étendent, et **en ce que** les rouleaux d'entrée (14) de la pluralité d'agencements à cadre rotatif (E ; E1, E2) sont décalés les uns par rapport aux autres dans la direction parallèle aux parties de bande (b).

2. Dispositif de commande de défilement de bande selon la revendication 1, dans lequel les bandes (B) sont respectivement déviées de 90° sur les rouleaux d'entrée (14).

3. Dispositif de commande de défilement de bande selon la revendication 1 ou 2, dans lequel les unités à cadre rotatif (E) et le système de guidage de bande (U, V) sont configurés pour un enfilage en Z.

4. Dispositif de commande de défilement de bande selon la revendication 3, dans lequel les unités à cadre rotatif (E) ont des dimensions identiques.

5. Dispositif de commande de défilement de bande selon la revendication 1, dans lequel les unités à cadre rotatif (E1, E2) et le système de guidage de bande (U, V) sont configurés pour un enfilage en U et les enfilages en U sont imbriqués les uns dans les autres, dans lequel les distances entre les rouleaux d'entrée (14) et les rouleaux de sortie (16) des unités à cadre rotatif présentes dans l'imbrication augmentent de l'intérieur vers l'extérieur.

6. Dispositif de commande de défilement de bande selon l'une des revendications précédentes, dans lequel les rouleaux d'entrée (14) et les rouleaux de sortie (16) de toutes les unités à cadre rotatif (E ; E1, E2) ont des diamètres identiques.

7. Dispositif de commande de défilement de bande selon l'une des revendications précédentes, dans lequel les bandes (B) sont déviées de 90° sur les rouleaux de sortie (16) respectifs.
